# EUROPEAN PATENT SPECIFICATION

(11) **EP 1 183 122 B1**
(45) Date of publication and mention of the grant of the patent: **25.06.2003**
(21) Application number: 00929703.7
(22) Date of filing: 12.05.2000
(51) Int. Cl.: B23B 1/00

(54) **HARD TURNING**
HARTDREHEN
TRAVAIL AU TOUR

(30) Priority: 04.06.1999 GB 9912893
(43) Date of publication of application: 06.03.2002
(73) Proprietor: Unova U.K. Limited, Aylesbury, Buckinghamshire HP20 2RQ (GB)
(72) Inventor: Manley, Stephen Robert, Kempston, Bedford MK42 7JU (GB); Riley, Martin John, Keighley, West Yorkshire BD20 7LQ (GB)
(74) Representative: Nash, Keith Wilfrid
(86) International application number: GB0001821
(87) International publication number: WO00074882

(56) References cited:
- EKSTEDT TERRY: "CHALLENGE OF HARD TURNING" CARBIDE AND TOOL JOURNAL,US,BRIDGEVILLE, PA, vol. 19, no. 5, September 1987 (1987-09), pages 21-24-24, XP002087492 ISSN: 0192-8333
- HASAN RIZWAN: "Why are you still grinding?" MANUFACTURING ENGINEERING,US,DEARBORN, MI, vol. 120, no. 2, 1 February 1998 (1998-02-01), pages 76,78-80, XP002087491

## Description

This invention concerns the formation of surface finishes in machined components and applies both to internal and external surfaces.

### Background to the invention

The surfaces of metal components hitherto surface-finished by a grinding process, have been specified by means of measurements which can be performed on the components as they are manufactured.

Typically these measurements have involved size tolerance at a particular position along the length of the component, an acceptable variation in the height of peaks to troughs in the surface when measured along a single line along the component, known as the Ra measure, and the bearing ratio of the peaks and troughs at one or more depths from the peaks. This last measurement may be required to lie between a maximum and a minimum percentage of the length of the line.

Overall flatness has often been measured in terms of the percentage of the area of the surface which will be inked by a standard bluing gauge.

All other things being equal, provided the measurements on production components fall within the specification set down as acceptable by the designer, the components will be expected to function correctly for the purpose they are intended. Thus for example surface finish specifications may be laid down for the bores in fuel injectors for diesel engines and for the cones for synchronous meshing of gears in transmission units.

Generally the surface finishing of such components has been achieved by grinding processes which, although superficially leaving a very smooth surface finish, in fact leave a pitted surface (at the micron level) since the removal of the metal is achieved by each piece of grit in the surface of the grinding wheel gouging out a tiny portion of the metal, with the relative rotation of the wheel and the component. The grit contact with the metal is relatively random and arbitrary since the grit is not uniform in size and distribution and the result is a surface having a large number of tiny pockets relatively randomly distributed over the area of the surface.

It has been proposed to replace the grinding finishing step for such components with precision turning, sometimes referred to as hard turning. It is an object of the present invention to provide a process and apparatus for achieving a machined surface finish which, to a first approximation, is within the specification laid down for the component when finished by grinding. In this way, for example turned components can be compared alongside components produced by conventional techniques.

In addition if, as may be the case, the life and/or functionality of certain components is dependent on the type of surface produced by grinding, the method of the invention will go some way to ensuring that the life and/or functionality of such components when machined, eg by hard turning, is similar to that of the ground components.

Known from Ekstedt Terry: "Challenge of Hard Turning" Carbide and Tool Journal, US, Bridgeville, PA,Vol. 19, no. 5, Septmeber 1987 (1987-09), pages 21-24-24, ISSN:0192-8333, is a turning process in which a cutting tool engages the surface of a rotating component so as to remove a helix of metal therefrom as a result of synchronisation of the relative axial movement of the tool and the component and the rotation of the latter.

A generally similar disclosure is to be found in Hasan Rizwan: "Why are you still grinding?" Manufacturing Engineering, US, Dearborn, MI, vol. 120, no. 2, 1 February 1998 (1998-02-01), pages 76, 78-80.

### Summary of the invention

According to one aspect of the present invention there is provided a turning process in which a cutting tool engages the surface of a rotating component so as to remove a helix of metal therefrom as a result of synchronisation of the relative axial movement of the tool and the component and the rotation of the latter, characterised in that at least the depth of the cut achieved by the tool and component engagement is under the control of a computer which is programmed to increase the depth of cut at intervals during the turning process, so as to create in the turned surface a plurality of depressions which have a marginally smaller radius of curvature than that of the surrounding turned surface.

The computer may also be programmed to control the speed of rotation of the component.

The computer may also be programmed to control the relative axial movement between the tool and the component.

Typically the tool is moved axially relative to the component so as to progress the point of engagement between the tool and the surface of the component along the length of the latter as the component rotates.

Preferably the computer is programmed so as to synchronize the rotation of the component and the axial movement of the tool so that the locus of the point of engagement of the tool and the component is a helix.

Preferably the axial movement of the tool is synchronised with the rotation of the component so that the angle of the helix is such as to just advance the tool by the thickness of its cutting tip during each revolution, so that not only is a continuous helix of metal peeled away from the surface of the component as the machining progresses but a smooth surface is left behind.

If a taper is required in the component the depth of cut may be increased progressively with axial advance of the tool relative to the component, however the increasing depth of cut would still normally be controlled so as to produce a smooth surface, albeit of progressively reducing diameter.

The programming of the computer may be such as to increase the depth of cut during regularly spaced apart intervals.

The timing of the intervals may such that at least one depression is created during at least a part of each revolution of the component.

The timing may be such as to produce a plurality of depressions around each revolution of the component.

The timing of the intervals may be adjusted from one revolution to the next so that depressions do not become aligned parallel to the axis of the component.

The timing of the intervals may be selected so as to produce a regular or random or pseudo random pattern of depressions in the component surface.

Each interval may be of the same duration so that each depression is of the same extent, or a variation may be introduced into the duration of each of the intervals so that the depressions are of correspondingly different size.

In a preferred method each interval is arranged to extend over a plurality of consecutive revolutions of the component so that each resulting depression comprises an annular region of reduced diameter.

The transition between the turned surface of the component and each such annular depression may be gradual and itself may be generated during more than one revolution of the component, by programming the computer to increase the depth of cut gradually over the said one or more revolutions during which the transition is to occur. At the other end of such an annular depression the computer programme may be arranged to reduce the depth of cut in a similar gradual manner over a corresponding number of revolutions of the component, back to that required to produce the turned surface of the component beyond the annular depression.

Where the component is to taper in overall diameter, the depth of cut instructions generated by the programme during the transitions and during the generation of each reduced diameter annular region must take this into account, so that diameter of the component is progressively reduced during the whole of the turning process.

Since the depressions are merely to break-up what would otherwise be a smooth surface produced by the turning process, the depth of each depression relative to the surrounding turned surface will normally need only to be very small. Differences in radius as between the base of each depression and the surrounding turned surface may be of the order of 1 micron or less. Where more significant surface break-up is desired the difference in radius may be of the order of 2 or 3 microns or more.

Depending on the properties required of the final surface the programming of the computer may be such as to produce relatively small but relatively deep depressions per unit area of the component surface or relatively large but relatively shallow depressions over the same surface area.

Likewise the number of depressions per unit area of the component surface may be adjusted to produce the desired characteristics in the final surface.

Where the final surface specification includes a bearing ratio vector requirement, the latter may be achieved by adjusting the rate of change of radius (diameter) at one or both ends of each depression so that the required percentage of component material will exist at the specified depths relative to the peak diameter of the turned surface.

Where a bluing gauge percentage figure has to be complied with, the computer may be programmed to adjust the extent of the depressions relative to the remaining area of the turned component surface, so as to provide a sufficient overall area of turned surface which will be inked by the gauge, during the bluing test, relative to the overall area of the depressions, which will not normally become inked during the test.

Where the final surface is to be capable of being tested at any point along its axial length, the programme should arrange that the depressions are evenly distributed over the overall surface of the component to ensure that measurements made on the component will tend to be the same wherever they are made.

Where the component is to be gauged as part of the control of the turning process, it is desirable that the precise positions of the depressions and any transitions between depression and main turned surface are known and to this end the programme advantageously organises the computer to store co-ordinates of the depressions and transitions or an algorithm of their generation, so that an appropriate correction can be made to the result of any gauged value of (say) diameter, or the position at which a gauge is to be applied may be determined in advance of the gauging step and the gauge or the component positioned accordingly before the measurement is made.

According to another aspect of the invention there is provided a programmed computer adapted to control the operation of a metal machining process involving the removal of metal from a rotating workpiece by the engagement therewith of the tip of a metal cutting tool, at least the position of which is controlled by the said computer, and which as a result of synchronised relative movement between the tool and the workpiece, would produce a smooth machined surface thereon, characterised in that the programme serves to alter the instantaneous position of the tool so as to introduce into the otherwise smooth surface, during the machining process, plural spaced apart depressions for the purpose of simulating a surface typical of that which would be obtained thereon if the latter had been finished by grinding.

According to still another aspect of the invention, there is provided a computer programme adapted to control the operation of a metal machining process involving the removal of metal from a rotating workpiece by the engagement therewith of the tip of a metal cutting tool at least the position of which is controlled by the said computer, and which as a result of synchronised relative movement between the tool and the workpiece, would produce a smooth machined surface thereon, characterised in that the programme serves to alter the instantaneous position of the tool so as to introduce into the otherwise smooth surface, during the machining process, plural spaced apart depressions for the purpose of simulating a surface typical of that which would be obtained thereon if the latter had been finished by grinding.

The invention also provides a computer program for operating a computer, adapted to control the operation of a metal machining process involving the removal of metal from a rotating workpiece by the engagement therewith of the tip of a metal cutting tool, at least the position of which is controlled by the said computer, and which as a result of synchronised relative movement between the tool and the workpiece, would produce a smooth machined surface thereon, characterised in that the programme serves to alter the instantaneous position of the tool so as to introduce into the otherwise smooth surface, during the machining process, plural spaced apart depressions for the purpose of simulating a surface typical of that which would be obtained thereon if the latter had been finished by grinding. The program may be carried by a data carrier.

According to yet another aspect of the invention, there is provide a machine tool in combination with a computer based control system therefor, when programmed to perform a hard turning process on a rotating workpiece involving the removal of metal from the surface thereof by the engagement therewith of the tip of a metal cutting tool at least the position of which is controlled by the said computer based control system, and which as a result of synchronised relative movement between the tool and the workpiece, would produce a smooth surface thereon, characterised in that the programme serves to alter the instantaneous position of the tool during the machining process, so as to introduce into the otherwise smooth surface plural spaced apart depressions, for the purpose of simulating a surface typical of that which would be obtained on the workpiece if the latter had been finished by grinding. The machine may further comprise gauging and/or measuring the machined part during the machining process, to generate signals indicative of one or more dimensions of the machined part, and supplying the signals to the computer, to assist in the control of the machining process.

### Examples of components which may be made in accordance with the invention.

Synchro cones for gearboxes have hitherto been formed by grinding to a particular surface and taper diameter specification. In a method in accordance with the invention of hard turning such a component so as to have a surface which will fall within the previous specification for the component, using a computer controlled metal turning process as aforesaid, the computer was programmed so as to introduce into the turned surface a plurality of annular depressions having a depth relative to the turned surface of 1 micron, pitched at 1mm spacings along the axial length of the component. Each depression extended over a total axial distance of 0.2mm with a transition involving a gradual change in radius extending over 0.02mm at each side of the depression (within the 0.2mm width), so that the base of the depression, which lay a full 1 micron below the turned surface at either end, extended over less than the 0.2mm width of the depression.

Other examples of a similar component involved the formation therein of similar depressions having the same overall axial extent and similar transitions, but with depths of 2 microns and 3 microns respectively, for comparison purposes.

Injector bores for fuel injectors for diesel engines have to be internally finished to a high accuracy and have hitherto been ground to achieve the desired finish and diameter. The invention offers an alternative manufacturing process for such injectors in which the bores are hard turned under computer control in accordance with the invention and have depressions formed in their internal surfaces to produce a surface having appropriate characteristics to conform to the original specification for the product when internally ground.

The invention will now be described, by way of example only, with reference to the accompanying drawings in which:
Figure 1 is a perspective view of a synchromesh gear for an automotive manual gear box, and having an external cone formed by a turning process in accordance with the present invention;
Figure 2 is a magnified plan view of depressions formed in the surface of the cone shown in Figure 1; and
Figure 3 is a diagram in section (not to scale) showing the depressions of Figure 2.

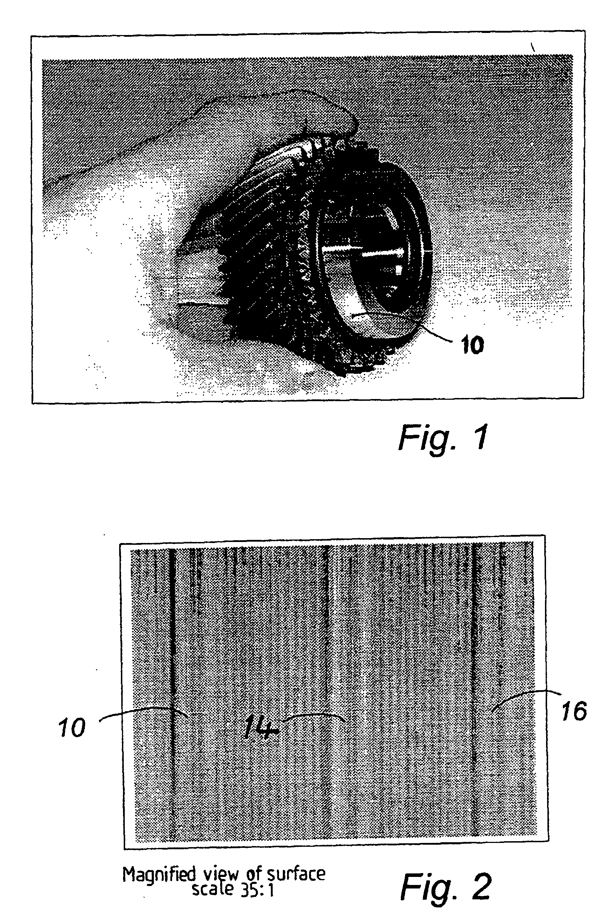

The synchromesh gear shown in Figure 1 has a short external taper 10 which is formed on a precision lathe, operating in accordance with the process of the invention. The lathe may be a hard turning lathe Type DT40 made by Landis Lund (a division of UNOVA UK Limited) of Cranfield, England. For further details of such a machine tool or precision lathe, reference may be made to published International Patent specification WO97/30381.

The computer programme which controls the lathe for forming the taper 10, is arranged to introduce minute annular depressions in the otherwise relatively smooth surface of the taper 10. Three such depressions in the surface of the taper, are shown at 12, 14 and 16 in the magnified plan view of Figure 2, which is enlarged 35 times.

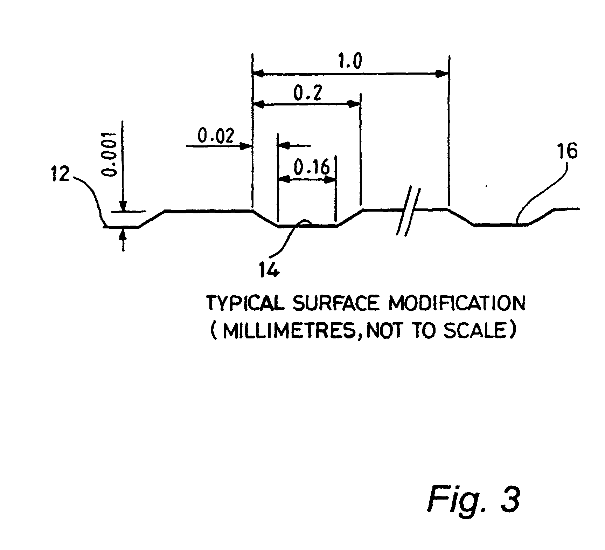

For a clearer view of the depressions, reference is made to the section shown in Figure 3, in which typically each depression has a depth of 1 micron, a base width of 0.16mm, and an overall width of 0.2mm which merges down to the base at each side over a width of 20 microns. The distance or pitch between depressions is approximately 1.0mm.

Although the invention has been described primarily with reference tc hard turning, it is applicable generally to any machining process where the surface is generated by metal cutting. It could therefore also be applied to boring, eg jig boring, and even to CNC form milling using a round-nosed cutter.

## Claims

1. A turning process in which a cutting tool engages the surface of a rotating component so as to remove a helix of metal therefrom as a result of synchronisation of the relative axial movement of the tool and the component and the rotation of the latter, **characterised in that** at least the depth of the cut achieved by the tool and component engagement is under the control of a computer which is programmed to increase the depth of cut at intervals during the turning process, so as to create in the turned surface a plurality of depressions which have a marginally smaller radius of curvature than that of the surrounding turned surface.

2. A process according to claim 1 in which the computer is also programmed to control the speed of rotation of the component.

3. A process according to claim 1 or claim 2 in which the computer is also programmed to control the relative axial movement between the tool and the component.

4. A process according to any one preceding claim in which the computer is programmed so as to synchronize the rotation of the component and the axial movement of the tool so that the locus of the point of engagement of the tool and the component is a helix.

5. A process according to any one preceding claim in which the programming is such as to increase the depth of cut during regularly spaced apart intervals.

6. A process according to claim 5 in which the timing of the intervals is such as to produce a plurality of depressions around each revolution of the component.

7. A process according to claim 5 or claim 6 in which the timing of the intervals is adjusted from one revolution to the next so that depression do not become aligned parallel to the axis of the component.

8. A process according to any one preceding claim in which the transition between the turned surface of the component and each such depression is gradual and itself generated during more than one revolution of the component, by programming the computer to increase the depth of cut gradually over the said one or more revolutions during which the transition is to occur.

9. A process according to any one preceding claim in which at one end of such a depression the computer programme is arranged to reduce the depth of cut in a similar gradual manner over a corresponding number of revolutions of the component, back to that required to produce the turned surface of the component beyond the depression.

10. A process according to any one preceding claim in which the component is to taper in overall diameter, and the depth of cut instructions generated by the programme during the transitions and during the generation of each reduced diameter region takes this into account, so that the diameter of the component is progressively reduced during the whole of the turning process.

11. A process according to any one preceding claim in which the final surface specification includes a bearing ratio vector requirement, which is achieved by adjusting the rate of change of radius at one or both ends of each depression so that the required percentage of component material will exist at the specified depths relative to the peak diameter of the turned surface.

12. A process according to any one preceding claim in which a bluing gauge percentage figure has to be complied with, and the computer is programmed to adjust the extent of the depressions relative to the remaining area of the turned component surface, so as to provide a sufficient overall area of turned surface which will be inked by the gauge during a bluing test, relative to the overall area of the depressions which will not normally become inked during the test.

13. A process according to any one preceding claim, in which the final surface is to be capable of being tested at any point along its axial length, wherein the programme arranged for the depressions to be are evenly distributed over the overall surface of the component to ensure that measurements made on the component will tend to be the same wherever they are made.

14. A process according to any one preceding claim, in which the component is to be gauged as part of the control of the turning process, wherein the programme organises the computer to store co-ordinates of the depressions and transitions or an algorithm of their generation, so that an appropriate correction can be made to the result of any gauged value of the diameter, or the position at which a gauge is to be applied can be determined in advance of the gauging step and the gauge or the component positioned accordingly before the measurement is made.

15. A process according to any of claims 1 to 14, which further comprises gauging and/or measuring the machined part during the machining process, to generate signals indicative of one or more dimensions of the machined part, and supplying the signals to the computer, to assist in the control of the machining process.

16. A programmed computer, adapted to control the operation of a metal machining process involving the removal of metal from a rotating workpiece by the engagement therewith of the tip of a metal cutting tool, at least the position of which is controlled by the said computer, and which as a result of synchronised relative movement between the tool and the workpiece, would produce a smooth machined surface thereon, **characterised in that** the programme serves to alter the instantaneous position of the tool so as to introduce into the otherwise smooth surface, during the machining process, plural spaced apart depressions for the purpose of simulating a surface typical of that which would be obtained thereon if the latter had been finished by grinding.

17. A computer program for operating a computer, adapted to control the operation of a metal machining process involving the removal of metal from a rotating workpiece by the engagement therewith of the tip of a metal cutting tool, at least the position of which is controlled by the said computer, and which as a result of synchronised relative movement between the tool and the workpiece, would produce a smooth machined surface thereon, **characterised in that** the programme serves to alter the instantaneous position of the tool so as to introduce into the otherwise smooth surface, during the machining process, plural spaced apart depressions for the purpose of simulating a surface typical of that which would be obtained thereon if the latter had been finished by grinding.

18. A data carrier bearing the computer program of claim 17.

19. A machine tool in combination with a computer based control system therefor, when programmed to perform a hard turning process on a rotating workpiece involving the removal of metal from the surface thereof by the engagement therewith of the tip of a metal cutting tool, at least the position of which is controlled by the said computer based control system, and which as a result of synchronised relative movement between the tool and the workpiece, would produce a smooth surface thereon, **characterised in that** the programme serves to alter the instantaneous position of the tool during the machining process, so as to introduce into the otherwise smooth surface plural spaced apart depressions, for the purpose of simulating a surface typical of that which would be obtained on the workpiece if the latter had been finished by grinding.

20. A machine tool according to claim 19, further comprising at least one gauging or measuring device adapted to perform measurements on the workpiece during the machining process, to generate signals indicative of one or more dimensions of the workpiece, and means for conveying the signals to the computer as feedback signals indicative of how the process is progressing, to assist in the control of the process.

## Patentansprüche

1. Drehverfahren, bei dem ein Schneidwerkzeug an der Oberfläche eines drehenden Teils angreift, um eine Helix aus Metall davon zu entfernen, als Ergebnis der Synchronisation der relativen Axialbewegung des Werkzeugs und des Teils und der Drehung des Teils, **dadurch gekennzeichnet, dass** wenigstens die Tiefe des Schnitts, der durch das Angreifen des Werkzeugs an dem Teil erzielt wird, von einem Computer gesteuert wird, der so programmiert ist, dass die Tiefe des Schnitts in Intervallen während des Drehprozesses vergrößert wird, um in der gedrehten Oberfläche mehrere Vertiefungen zu schaffen, die einen unwesentlich kleineren Krümmungsradius als den der umgebenden gedrehten Oberfläche haben.

2. Verfahren nach Anspruch 1, bei dem der Computer auch so programmiert ist, dass er die Drehgeschwindigkeit des Teils regelt.

3. Verfahren nach Anspruch 1 oder 2, bei dem der Computer auch so programmiert ist, dass er die relative Axialbewegung zwischen dem Werkzeug und dem Teil steuert.

4. Verfahren nach einem der vorigen Ansprüche, bei dem der Computer so programmiert ist, dass er die Drehung des Teils und die Axialbewegung des Werkzeugs synchronisiert, so dass so dass die Ortskurve des Angriffspunkts des Werkzeugs an dem Teil eine Helix ist.

5. Verfahren nach einem der vorigen Ansprüche, bei dem die Programmierung so ist, dass die Tiefe des Schnitts in Intervallen von regelmäßigem Abstand vergrößert wird.

6. Verfahren nach Anspruch 5, bei dem die zeitliche Abfolge der Intervalle so ist, dass mehrere Vertiefungen bei jeder Umdrehung des Teils entstehen.

7. Verfahren nach Anspruch 5 oder Anspruch 6, bei dem die zeitliche Abfolge der Intervalle von einer Umdrehung zur nächsten eingestellt werden kann, so dass die Vertiefungen nicht parallel zur Achse des Teils fluchten.

8. Verfahren nach einem der vorigen Ansprüche, bei dem der Übergang zwischen der gedrehten Oberfläche des Teils und jeder Vertiefung graduell ist und selbst durch mehr als eine Umdrehung des Teils erzeugt wird, indem der Computer so programmiert wird, dass die Tiefe des Schnitts graduell während der einen Umdrehung oder der mehreren Umdrehungen vergrößert wird, während denen der Übergang stattfinden soll.

9. Verfahren nach einem der vorigen Ansprüche, bei dem an einem Ende einer solchen Vertiefung das Computerprogramm so eingestellt ist, dass die Tiefe des Schnitts in ähnlicher Weise graduell während einer entsprechenden Anzahl von Umdrehungen des Teils verringert wird, zurück zu der Tiefe, die erforderlich ist, um die gedrehte Oberfläche des Teils außerhalb der Vertiefung herzustellen.

10. Verfahren nach einem der vorigen Ansprüche, bei dem das Teil sich in seinem Gesamtdurchmesser verjüngt, und bei dem dies bezüglich der Befehle zur Tiefe des Schnitts, die das Programm während der Übergänge und während der Erzeugung jedes Bereichs mit verringertem Durchmesser generiert, berücksichtigt wird, so dass der Durchmesser des Teils während des gesamten Drehvorgangs fortschreitend verkleinert wird.

11. Verfahren nach einem der vorigen Ansprüche, bei dem die Spezifizierung der fertigen Oberfläche eine Anforderung an den Tragverhältnisvektor umfasst, die erfüllt wird, indem die Änderungsrate des Radius an einem oder beiden Enden jeder Vertiefung eingestellt wird, so dass der erforderliche prozentuale Anteil an Material des Teils in den vorher bestimmten Tiefen relativ zu dem Bergdurchmesser der gedrehten Oberfläche vorhanden ist.

12. Verfahren nach einem der vorigen Ansprüche, bei dem ein Prozentsatz einer Tuschierlehre erfüllt werden muss und der Computer so programmiert wird, dass die Ausdehnung der Vertiefungen relativ zu der restlichen Fläche der Oberfläche des gedrehten Teils eingestellt wird, um eine genügend große Gesamtfläche der gedrehten Oberfläche vorzusehen, die während eines Tuschiertests durch die Lehre tuschiert wird, relativ zu der Gesamtfläche der Vertiefungen, die normalerweise während des Tests nicht tuschiert werden.

13. Verfahren nach einem der vorigen Ansprüche, bei dem es möglich ist, die fertige Oberfläche an jedem beliebigen Punkt ihrer Axiallänge zu testen, wobei das Programm vorsieht, dass die Vertiefungen gleichmäßig über die Gesamtoberfläche des Teils verteilt sind, um zu gewährleisten, dass an dem Teil vorgenommene Messungen tendenziell gleich sind, unabhängig davon, wo sie vorgenommen werden.

14. Verfahren nach einem der vorigen Ansprüche, bei dem das Teil im Rahmen der Kontrolle des Drehverfahrens geeicht werden soll, wobei das Programm den Computer so programmiert, dass die Koordinaten der Vertiefungen und Übergänge oder ein Algorithmus zu deren Erzeugung gespeichert werden, so dass eine geeignete Korrektur am Ergebnis jedes gemessenen Werts von dem Durchmesser oder der Position, an der das Eichmaß angesetzt werden soll, vor dem Messschritt vorgenommen werden und die Lehre oder das Teil entsprechend positioniert werden kann, bevor die Messung durchgeführt wird.

15. Verfahren nach einem der Ansprüche 1 bis 14, das weiterhin ein Eichen und/oder Messen des bearbeiteten Teils während des Bearbeitungsverfahrens zur Erzeugung von Signalen, die eine oder mehrere Dimensionen des bearbeiteten Teils anzeigen, sowie die Einspeisung der Signale in den Computer, um zur Steuerung des Bearbeitungsverfahrens beizutragen, umfasst.

16. Programmierter Computer, der die Durchführung des Verfahrens der maschinellen Bearbeitung des Metalls steuert, wobei dieses Verfahren das Entfernen von Metall von einem drehenden Werkstück umfasst, indem die Spitze eines Metallschneidewerkzeugs an diesem angreift, wobei wenigstens deren Position von dem Computer gesteuert wird, und die als Ergebnis der synchronisierten relativen Bewegung zwischen dem Werkzeug und dem Werkstück auf diesem eine glatte, maschinell bearbeitete Oberfläche erzeugt, **dadurch gekennzeichnet, dass** das Programm dazu dient, die momentane Position des Werkzeugs zu ändem, um während des maschinellen Bearbeitungsverfahrens mehrere voneinander beabstandete Vertiefungen in der ansonsten glatten Oberfläche zu erzeugen, mit dem Zweck, eine Oberfläche zu simulieren, wie sie typischerweise entstünde, wenn die Oberfläche durch Schleifen bearbeitet würde.

17. Computerprogramm zum Betrieb eines Computers, das die Durchführung des Verfahrens der maschinellen Bearbeitung des Metalls steuert, wobei dieses Verfahren das Entfernen von Metall von einem drehenden Werkstück umfasst, indem die Spitze eines Metallschneidewerkzeugs an diesem angreift, wobei wenigstens deren Position von dem Computer gesteuert wird, und die als Ergebnis der synchronisierten relativen Bewegung zwischen dem Werkzeug und dem Werkstück auf diesem eine glatte, maschinell bearbeitete Oberfläche erzeugt, **dadurch gekennzeichnet, dass** das Programm dazu dient, die momentane Position des Werkzeugs zu ändern, um während des maschinellen Bearbeitungsverfahrens mehrere voneinander beabstandete Vertiefungen in der ansonsten glatten Oberfläche zu erzeugen, mit dem Zweck, eine Oberfläche zu simulieren, wie sie typischerweise entstünde, wenn die Oberfläche durch Schleifen bearbeitet würde.

18. Datenträger, auf dem das Computerprogramm nach Anspruch 17 gespeichert ist.

19. Werkzeugmaschine in Kombination mit einem computergestützten Steuerungssystem dafür, das so programmiert ist, dass es ein Hartdrehverfahren an einem drehenden Werkstück durchführt, wobei dieses Verfahren das Entfernen von Metall von dessen Oberfläche umfasst, indem die Spitze eines Metallschneidewerkzeugs daran angreift, wobei wenigstens deren Position von dem computergestützten Steuerungssystem gesteuert wird, und die als Ergebnis der synchronisierten relativen Bewegung zwischen dem Werkzeug und dem Werkstück auf diesem eine glatte, maschinell bearbeitete Oberfläche erzeugt, **dadurch gekennzeichnet, dass** das Programm dazu dient, während des maschinellen Bearbeitungsverfahrens die momentane Position des Werkzeugs zu ändern, um mehrere voneinander beabstandete Vertiefungen in der ansonsten glatten Oberfläche zu erzeugen, mit dem Zweck, eine Oberfläche zu simulieren, wie sie typischerweise entstünde, wenn die Oberfläche durch Schleifen bearbeitet würde.

20. Werkzeugmaschine nach Anspruch 19, die weiterhin wenigstens eine Eich- oder Messeinrichtung umfasst, die Messungen an dem bearbeiteten Teil während des Bearbeitungsverfahrens ausführt, um Signale zu erzeugen, die eine oder mehrere Dimensionen des bearbeiteten Teils anzeigen, sowie eine Einrichtung zur Übertragung der Signale an den Computer als Regelsignale, die anzeigen, wie das Verfahren fortschreitet, um zur Steuerung des Verfahrens beizutragen.

## Revendications

1. Procédé de tournage dans lequel un outil de coupe vient en prise avec la surface d'une pièce en rotation, afin d'enlever un ruban hélicoïdal de métal d'avec ladite pièce suite à une synchronisation du mouvement relatif axial de l'outil et de la pièce, avec la rotation de cette dernière, **caractérisé par le fait qu'**au moins la profondeur de la coupe, obtenue par la venue en prise de l'outil et de la pièce, est commandée par un ordinateur qui est programmé en vue d'augmenter la profondeur de coupe par intervalles, au cours du processus de tournage, de manière à créer, dans la surface tournée, une pluralité de creusures présentant un rayon de courbure très légèrement inférieur à celui de la surface tournée environnante.

2. Procédé de tournage selon la revendication 1, dans lequel l'ordinateur est également programmé pour commander la vitesse de rotation de la pièce.

3. Procédé selon la revendication 1 ou la revendication 2, dans lequel l'ordinateur est également programmé pour commander le mouvement relatif axial entre l'outil et la pièce.

4. Procédé selon une quelconque revendication précédente, dans lequel l'ordinateur est programmé pour synchroniser la rotation de la pièce avec le mouvement axial de l'outil, de façon telle que le lieu du point de venue en prise de l'outil et de la pièce se présente comme une hélice.

5. Procédé selon une quelconque revendication précédente, dans lequel la programmation vise à accroître la profondeur de coupe durant des intervalles à espacement régulier.

6. Procédé selon la revendication 5, dans lequel la synchronisation des intervalles vise à produire une pluralité de creusures lors de chaque révolution de la pièce.

7. Procédé selon la revendication 5 ou la revendication 6, dans lequel la synchronisation des intervalles est réglée d'une révolution à la suivante, de façon telle que des creusures ne soient pas alignées parallèlement à l'axe de la pièce.

8. Procédé selon une quelconque revendication précédente, dans lequel la transition, entre la surface tournée de la pièce et chaque creusure ainsi obtenue, est progressive et est engendrée, par elle-même, au cours de plus d'une révolution de la pièce, en programmant l'ordinateur de manière qu'il augmente progressivement la profondeur de coupe pendant ladite ou lesdites révolutions durant lesquelles la transition doit intervenir.

9. Procédé selon une quelconque revendication précédente, dans lequel, à l'une des extrémités d'une creusure ainsi obtenue, le programme de l'ordinateur est conçu pour réduire la profondeur de coupe d'une manière similairement progressive, pendant un nombre correspondant de révolutions de la pièce, afin de la ramener à celle requise pour produire la surface tournée de la pièce au-delà de la creusure.

10. Procédé selon une quelconque revendication précédente, dans lequel la pièce est destinée à présenter un diamètre général décroissant, et les instructions de profondeur de coupe, générées par le programme au cours des transitions et au cours de la génération de chaque région de diamètre réduit, prennent ce paramètre en compte de façon telle que le diamètre de la pièce soit progressivement réduit durant l'intégralité du processus de tournage.

11. Procédé selon une quelconque revendication précédente, dans lequel la spécification de surface définitive englobe un impératif de vecteur de rapport de portée qui est obtenu en ajustant l'allure de la variation de rayon, à l'une des extrémités ou aux deux extrémités de chaque creusure, de manière que les profondeurs spécifiées présentent le pourcentage nécessaire de matière de la pièce, vis-à-vis du diamètre de crête de la surface tournée.

12. Procédé selon une quelconque revendication précédente, dans lequel un profil de pourcentage d'un calibre de coloration doit être respecté, et l'ordinateur est programmé pour ajuster l'étendue des creusures vis-à-vis de la superficie restante de la surface tournée de la pièce, afin de fournir une superficie globale suffisante de surface tournée qui est encrée par le calibre, lors d'un test de coloration, vis-à-vis de la superficie globale des creusures qui n'est normalement pas encrée au cours du test.

13. Procédé selon une quelconque revendication précédente, dans lequel la surface définitive doit être capable d'être testée en n'importe quel point le long de sa longueur axiale, sachant que le programme est conçu de manière que les creusures soient uniformément réparties sur la surface totale de la pièce, en vue d'assurer que des mesures, effectuées sur la pièce, aient tendance à être identiques quel que soit l'endroit où elles sont effectuées.

14. Procédé selon une quelconque revendication précédente, dans lequel la pièce doit être calibrée en tant que partie intégrante de la commande du processus de tournage, sachant que le programme organise l'ordinateur pour qu'il emmagasine des coordonnées des creusures et des transitions, ou un algorithme de leur génération, de façon qu'une correction appropriée puisse être apportée au résultat d'une quelconque valeur calibrée du diamètre ; ou que l'emplacement auquel un calibre doit être placé puisse être déterminé préalablement à l'étape de calibrage, et que le calibre ou la pièce soit positionné(e) de façon correspondante avant l'exécution de la mesure.

15. Procédé selon l'une quelconque des revendications 1 à 14, consistant par ailleurs à calibrer et/ou mesurer la partie usinée au cours du processus d'usinage, de manière à engendrer des signaux indicatifs d'une ou plusieurs dimensions de la partie usinée, et à délivrer les signaux à l'ordinateur en vue d'assister la commande du processus d'usinage.

16. Ordinateur programmé conçu pour commander le déroulement d'un processus d'usinage d'un métal impliquant l'enlèvement de métal d'avec une pièce en rotation, par la venue en prise entre cette dernière et la pointe d'un outil de coupe du métal, dont au moins la position est commandée par ledit ordinateur en produisant une surface usinée lisse sur la pièce, suite à un mouvement relatif synchronisé entre l'outil et ladite pièce, **caractérisé par le fait que** le programme sert à modifier la position instantanée de l'outil afin d'introduire au cours du processus d'usinage, dans la surface par ailleurs lisse, de multiples creusures espacées visant à simuler une surface représentant typiquement celle qui serait obtenue, sur ladite pièce, si cette dernière avait été finie par meulage.

17. Programme d'actionnement d'un ordinateur conçu pour commander le déroulement d'un processus d'usinage d'un métal impliquant l'enlèvement de métal d'avec une pièce en rotation, par la venue en prise entre cette dernière et la pointe d'un outil de coupe du métal, dont au moins la position est commandée par ledit ordinateur en produisant une surface usinée lisse sur la pièce, suite à un mouvement relatif synchronisé entre l'outil et ladite pièce, **caractérisé par le fait que** le programme sert à modifier la position instantanée de l'outil afin d'introduire au cours du processus d'usinage, dans la surface par ailleurs lisse, de multiples creusures espacées visant à simuler une surface représentant typiquement celle qui serait obtenue, sur ladite pièce, si cette dernière avait été finie par meulage.

18. Support de données portant le programme d'ordinateur de la revendication 17.

19. Machine-outil combinée à un système de commande associé, fonctionnant par ordinateur pour exécuter, lorsqu'il est programmé, un processus de tournage sur une pièce en rotation, impliquant l'enlèvement de métal d'avec sa surface, par la venue en prise entre cette dernière et la pointe d'un outil de coupe du métal, dont au moins la position est commandée par ledit système de commande fonctionnant par ordinateur, en produisant une surface lisse sur la pièce, suite à un mouvement relatif synchronisé entre l'outil et ladite pièce, **caractérisée par le fait que** le programme sert à modifier la position instantanée de l'outil au cours du processus d'usinage, afin d'introduire, dans la surface par ailleurs lisse, de multiples creusures espacées visant à simuler une surface représentant typiquement celle qui serait obtenue, sur ladite pièce, si cette dernière avait été finie par meulage.

20. Machine-outil selon la revendication 19, comprenant en outre au moins un dispositif de calibrage ou de mesure destiné à effectuer des mesures sur la pièce, au cours du processus d'usinage, de manière à engendrer des signaux indicatifs d'une ou plusieurs dimensions de la pièce ; et des moyens pour convoyer les signaux vers l'ordinateur, en tant que signaux de réinjection indicatifs de la manière dont le processus progresse, en vue d'assister la commande du processus.
